# EUROPEAN PATENT APPLICATION

(11) **EP 4 395 387 A1**
(43) Date of publication of application: **03.07.2024**
(21) Application number: 22861314.7
(22) Date of filing: 22.08.2022
(51) Int. Cl.: H04W 8/08, H04W 24/04, H04W 92/10, H04W 60/00

(54) **DEVICE AND METHOD**

(30) Priority: 27.08.2021 JP 2021138947
(71) Applicant: DENSO CORPORATION, Kariya-city, Aichi 448-8661 (JP); TOYOTA JIDOSHA KABUSHIKI KAISHA, Toyota-shi Aichi 471-8571 (JP)
(72) Inventor: YAMAMOTO, Tomoyuki, Kariya-city, Aichi 448-8661 (JP)
(74) Representative: TBK
(86) International application number: PCT/JP2022/031564
(87) International publication number: WO 2023/027026

(57) **Abstract**

An apparatus (200) according to an aspect of the present disclosure includes: an information obtaining unit (231) configured to obtain path information indicating at least a moving path of the apparatus; and a communication processing unit (235) configured to transmit, to a base station (100), a radio resource control, RRC, message including the path information, wherein the path information includes one or more pieces of waypoint-related information regarding a waypoint on the moving path, and addition indication information regarding that the one or more pieces of the waypoint-related information are additional.

## Description

### CROSS-REFERENCE TO RELATED APPLICATIONS

This application is based on Japanese Patent Application No. 2021-138947, filed on August 27, 2021, the content of which is incorporated herein.

### Technical Field

The present disclosure relates to an apparatus and a method.

### Background Art

In 3rd Generation Partnership Project (3GPP) (registered trademark) Release 15, as a work item for long term evolution (LTE), some features for unmanned aerial vehicles (UAVs) as user equipments (UEs) have been discussed and specified (NPL 1).

One of the specified features is a Flight Path feature. With the Flight Path feature, a flight path of a UAV is reported from the UAV to the network in response to a request from the network. It is assumed that this will serve for control based on a moving plan of the UAV at the network side, such as handover or beamforming (NPL 2).

Although the Flight Path feature has not yet been defined for new radio (NR), utilization of the Flight Path feature is mentioned in proposals of work items for Release 18 (NPLs 3 to 5).

### Citation List

### Non Patent Literature

NPL 1: 3GPP TS 36.331 V15.14.0 (2021-06), "3rd Generation Partnership Project; Technical Specification Group Radio Access Network; Evolved Universal Terrestrial Radio Access (E-UTRA); Radio Resource Control (RRC); protocol specification (Release 15)"
NPL 2: 3GPP TSG-RAN WG2 Meeting #101bis Sanya, China, 16 - 20 Apr 2018, R2-1805125, Huawei, HiSilicon, CMCC, Fraunhofer, Nokia, Nokia Shanghai Bell, Lenovo, Motorola Mobility, InterDigital, KDDI, "Discussion on flight path information"
NPL 3: 3GPP TSG RAN - RAN-Rel-18 workshop, Online, 2021-06-28 - 2021-07-02, RWS-210190, Ericsson, "Motivation for Rel-18 UAV"
NPL 4: 3GPP TSG RAN Rel-18 workshop, Electronic Meeting, June 28 - July 2, 2021, RWS-210254, Lenovo, Motorola Mobility, "Discussion on UAV Swarm Support in NR RAN for Rel-18"
NPL 5: 3GPP TSG RAN Rel-18 workshop, Electronic Meeting, June 28 - July 2, 2021, RWS-210474, ZTE, Sanechips, "Support of UAV for 5G Advanced"

### Summary of the Invention

A detailed study by the inventors has revealed the following issue. That is, additions to path information are not considered in the framework of Release 15 described in NPLs 1 and 2.

For example, assuming that the framework is applied to additions to path information, the path information is reported using signaling each time an addition is made to the path information. At that time, the whole path information for an unreached path is reported. Thus, the path information for the unreached path within the already-reported path information will be redundantly reported. There is a possibility that the redundantly-reported path information might deteriorate signaling efficiency.

In addition, in a case where the framework is applied to additions to the path information, a UE could report additional path information when the UE reaches the end of the path indicated by the path information that has been reported. However, in a case where the UE cannot communicate with the network (that is, base stations) upon arrival at the end of the path, there is a possibility that reporting of the additional path information might be delayed. This would result in a situation where no base station has the additional path information.

An object of the present disclosure is to provide an apparatus and a method capable of suppressing deterioration in signaling efficiency for additions to path information or avoiding the situation where no base station has the additional path information.

An apparatus (200) according to an aspect of the present disclosure includes: an information obtaining unit (231) configured to obtain path information indicating at least a moving path of the apparatus; and a communication processing unit (235) configured to transmit, to a base station (100), a radio resource control, RRC, message including the path information, wherein the path information includes one or more pieces of waypoint-related information regarding a waypoint on the moving path, and addition indication information regarding that the one or more pieces of the waypoint-related information are additional.

An apparatus (100) according to an aspect of the present disclosure includes: a communication processing unit (145) configured to receive, from a user equipment (200), a radio resource control, RRC, message including path information indicating at least a moving path of the user equipment; and an information obtaining unit (141) configured to obtain the path information included in the RRC message, wherein the path information includes one or more pieces of waypoint-related information regarding a waypoint on the moving path, and addition indication information regarding that the one or more pieces of the waypoint-related information are additional.

A method performed by an apparatus (200) according to an aspect of the present disclosure includes: obtaining path information indicating at least a moving path of the apparatus; and transmitting, to a base station (100), a radio resource control, RRC, message including the path information, wherein the path information includes one or more pieces of waypoint-related information regarding a waypoint on the moving path, and addition indication information regarding that the one or more pieces of the waypoint-related information are additional.

A method performed by an apparatus (100) according to an aspect of the present disclosure includes: receiving, from a user equipment (200), a radio resource control, RRC, message including path information indicating at least a moving path of the user equipment; and obtaining the path information included in the RRC message, wherein the path information includes one or more pieces of waypoint-related information regarding a waypoint on the moving path, and addition indication information regarding that the one or more pieces of the waypoint-related information are additional.

According to the present disclosure, it becomes possible to suppress deterioration in signaling efficiency for additions to path information or to avoid the situation where no base station has the additional path information. Note that the present disclosure may yield another advantageous effect instead of or in addition to this advantageous effect.

### Brief Description of Drawings

FIG. 1 is an explanatory diagram illustrating an example of a schematic configuration of a system according to embodiments of the present disclosure.
FIG. 2 is an explanatory diagram for explaining an example of communication control based on a moving path of a user equipment according to embodiments of the present disclosure.
FIG. 3 is a block diagram illustrating an example of a schematic functional configuration of a base station according to embodiments of the present disclosure.
FIG. 4 is a block diagram illustrating an example of a schematic hardware configuration of the base station according to embodiments of the present disclosure.
FIG. 5 is a block diagram illustrating an example of a schematic functional configuration of the user equipment according to embodiments of the present disclosure.
FIG. 6 is a block diagram illustrating an example of a schematic hardware configuration of the user equipment according to embodiments of the present disclosure.
FIG. 7 is a diagram for explaining an example of path information according to embodiments of the present disclosure.
FIG. 8 is a sequence diagram for explaining an example of a schematic flow of processing according to embodiments of the present disclosure.
FIG. 9 is a sequence diagram for explaining an example of a schematic flow of processing according to a first modification example of embodiments of the present disclosure.

### Description of Embodiments

Hereinafter, embodiments of the present disclosure will be described in detail with reference to the appended drawings. In the present specification and the drawings, elements to which similar descriptions are applicable are denoted with the same reference signs, thereby omitting duplicate descriptions.

Descriptions will be given in the following order:
1. Configuration of System
2. Configuration of Base Station
3. Configuration of User Equipment
4. Operation Examples
5. Modification Examples

### <1. Configuration of System>

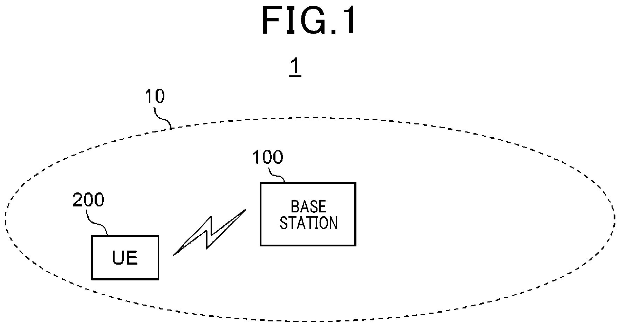

An example of a configuration of a system 1 according to embodiments of the present disclosure will be described with reference to FIG. 1. Referring to FIG. 1, the system 1 includes a base station 100 and a user equipment (UE) 200.

For example, the system 1 is a system compliant with technical specifications (TSs) in 3GPP. More specifically, for example, the system 1 is a system compliant with the TSs of 5G or new radio (NR). Naturally, the system 1 is not limited to this example. For example, the system 1 may be a system compliant with the TSs of LTE, LTE advanced (LTE-A), or 4G.

### (1) Base Station 100

The base station 100 is a node in a radio access network (RAN) and communicates with a UE (for example, UE 200) located within a coverage area 10 of the base station 100.

For example, the base station 100 communicates with a UE (for example, UE 200) using a RAN protocol stack. For example, the protocol stack includes protocols of radio resource control (RRC), service data adaptation protocol (SDAP), packet data convergence protocol (PDCP), radio link control (RLC), medium access control (MAC), and physical (PHY) layers. Alternatively, the protocol stack does not have to include all of these protocols, but may include some of these protocols.

For example, the base station 100 is a gNB. The gNB is a node that provides NR user plane and control plane protocol terminations towards a UE and is connected to the 5G core network (5GC) via an NG interface. Alternatively, the base station 100 may be an en-gNB. The en-gNB is a node that provides NR user plane and control plane protocol terminations towards a UE and operates as a secondary node in E-UTRA-NR dual connectivity (EN-DC).

The base station 100 may include a plurality of nodes. The plurality of nodes may include a first node that hosts higher layers included in the protocol stack and a second node that hosts lower layers included in the protocol stack. The higher layers may include the RRC, SDAP, and PDCP, while the lower layers may include the RLC, MAC, and PHY layers. The first node may be a central unit (CU) and the second node may be a distributed unit (DU). Note that the plurality of nodes may include a third node that performs lower level processing of the PHY layer and the second node may perform higher level processing of the PHY layer. The third node may be a radio unit (RU).

Alternatively, the base station 100 may be one of the plurality of nodes and may be connected to another unit of the plurality of nodes.

The base station 100 may be an integrated access and backhaul (IAB) donor or an IAB node.

### (2) UE 200

The UE 200 communicates with a base station. For example, the UE 200 communicates with the base station 100 in a case where the UE 200 is located within the coverage area 10 of the base station 100.

For example, the UE 200 communicates with a base station (for example, base station 100) using the protocol stack.

In particular, the UE 200 is mounted on a moving body. For example, the moving body may be an aircraft such as a UAV or a vehicle such as an autonomous driving car or a manual driving car with a navigation function. In the moving body, a moving path may be set in advance. The UE 200 can benefit from communication control based on the moving path by reporting the moving path to the network (that is, base station 100). Reporting of the moving path may be supported by, for example, a Flight Path mechanism or another moving path reporting mechanism.

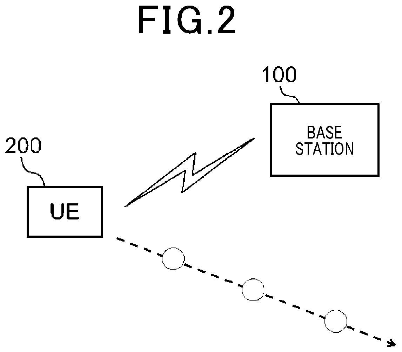

Referring to the example of FIG. 2, for example, the UE 200 reports the set moving path to the base station 100. The base station 100 preliminarily performs, for example, processing for handover or beamforming based on a future position of the UE 200 that is estimated from the reported moving path. This allows for performing communication control suitable for the estimated position at a timing when the UE 200 reaches the position.

### <2. Configuration of Base Station>

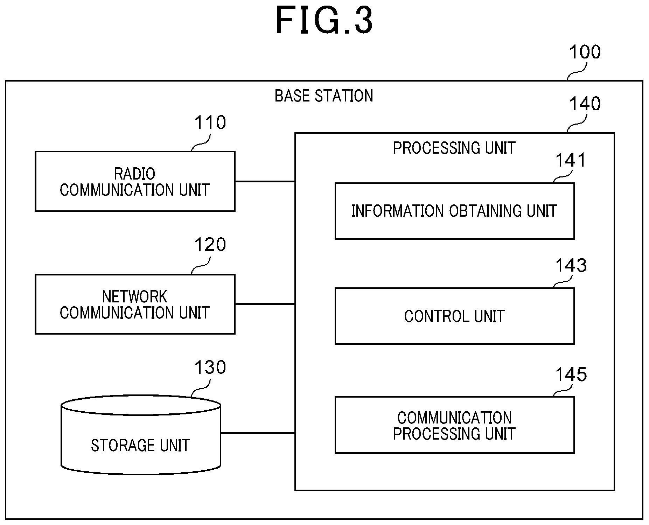

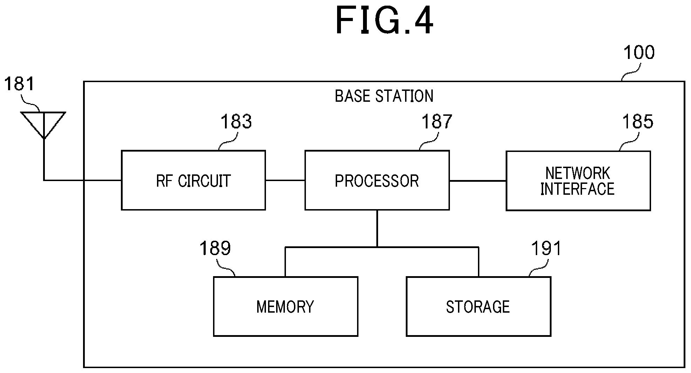

An example of a configuration of the base station 100 according to embodiments of the present disclosure will be described with reference to FIGS. 3 and 4.

### (1) Functional Configuration

First, an example of a functional configuration of the base station 100 according to embodiments of the present disclosure will be described with reference to FIG. 3. Referring to FIG. 3, the base station 100 includes a radio communication unit 110, a network communication unit 120, a storage unit 130, and a processing unit 140.

The radio communication unit 110 wirelessly transmits and receives signals. For example, the radio communication unit 110 receives signals from and transmits signals to a UE.

The network communication unit 120 receives signals from and transmits signals to the network.

The storage unit 130 stores various kinds of information for the base station 100.

The processing unit 140 provides various functions of the base station 100. The processing unit 140 includes an information obtaining unit 141, a control unit 143, and a communication processing unit 145. Note that the processing unit 140 may further include another component in addition to these components. That is, the processing unit 140 may also perform an operation other than operations of these components. Specific operations of the information obtaining unit 141, the control unit 143, and the communication processing unit 145 will be described in detail later.

For example, the processing unit 140 (communication processing unit 145) communicates with a UE (for example, UE 200) via the radio communication unit 110. For example, the processing unit 140 (communication processing unit 145) communicates with other nodes (for example, network nodes within the core network or other base stations) via the network communication unit 120.

### (2) Hardware Configuration

Next, an example of a hardware configuration of the base station 100 according to embodiments of the present disclosure will be described with reference to FIG. 4. Referring to FIG. 4, the base station 100 includes an antenna 181, a radio frequency (RF) circuit 183, a network interface 185, a processor 187, a memory 189, and a storage 191.

The antenna 181 converts signals into radio waves and emits the radio waves into the air. In addition, the antenna 181 receives radio waves in the air and converts the radio waves into signals. The antenna 181 may include a transmitting antenna and a receiving antenna or may be a single antenna for transmission and reception. The antenna 181 may be a directional antenna and may include a plurality of antenna elements.

The RF circuit 183 performs analog processing on signals that are transmitted and received via the antenna 181. The RF circuit 183 may include a high-frequency filter, an amplifier, a modulator, a lowpass filter, and the like.

The network interface 185 is, for example, a network adaptor, and transmits signals to and receives signals from the network.

The processor 187 performs digital processing on signals that are transmitted and received via the antenna 181 and the RF circuit 183. The digital processing includes processing of the RAN protocol stack. The processor 187 also performs processing on signals that are transmitted and received via the network interface 185. The processor 187 may include a plurality of processors or may be a single processor. The plurality of processors may include a baseband processor that performs the digital processing and one or more processors that perform other processing.

The memory 189 stores a program to be executed by the processor 187, a parameter related to the program, and other various kinds of information. The memory 189 may include at least one of a read only memory (ROM), an erasable programmable read only memory (EPROM), an electrically erasable programmable read only memory (EEPROM), a random access memory (RAM), and a flash memory. All or part of the memory 189 may be included in the processor 187.

The storage 191 stores various kinds of information. The storage 191 may include at least one of a solid state drive (SSD) and a hard disc drive (HDD).

The radio communication unit 110 may be implemented by the antenna 181 and the RF circuit 183. The network communication unit 120 may be implemented by the network interface 185. The storage unit 130 may be implemented by the storage 191. The processing unit 140 may be implemented by the processor 187 and the memory 189.

Part or all of the processing unit 140 may be virtualized. In other words, part or all of the processing unit 140 may be implemented as a virtual machine. In this case, part or all of the processing unit 140 may operate as a virtual machine on a physical machine including a processor, a memory, and the like (that is, hardware) and a hypervisor.

Given the hardware configuration described above, the base station 100 may include a memory (that is, memory 189) that stores a program and one or more processors (that is, processor 187) capable of executing the program, and the one or more processors may perform operations of the processing unit 140 by executing the program. The program may be a program for causing the processors to execute the operations of the processing unit 140.

### <3. Configuration of User Equipment>

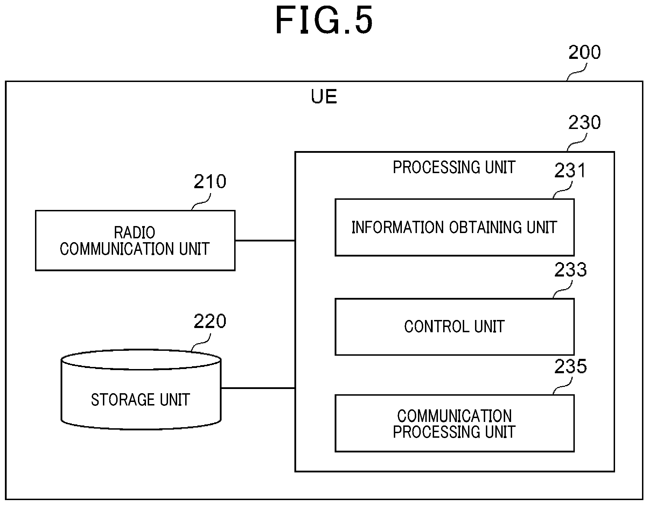

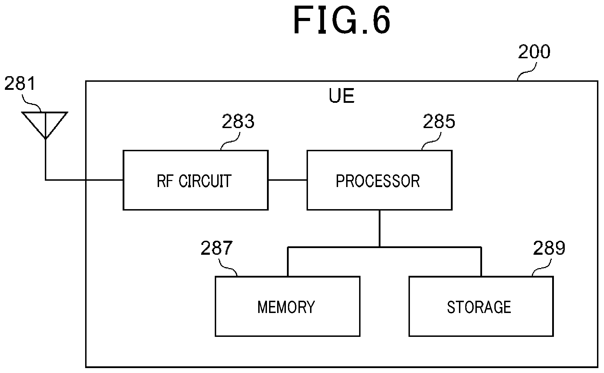

An example of a configuration of the UE 200 according to embodiments of the present disclosure will be described with reference to FIGS. 5 and 6.

### (1) Functional Configuration

First, an example of a functional configuration of the UE 200 according to embodiments of the present disclosure will be described with reference to FIG. 5. Referring to FIG. 5, the UE 200 includes a radio communication unit 210, a storage unit 220, and a processing unit 230.

The radio communication unit 210 wirelessly transmits and receives signals. For example, the radio communication unit 210 receives signals from and transmits signals to a base station. For example, the radio communication unit 210 receives signals from and transmits signals to another UE.

The storage unit 220 stores various kinds of information for the UE 200.

The processing unit 230 provides various functions of the UE 200. The processing unit 230 includes an information obtaining unit 231, a control unit 233, and a communication processing unit 235. Note that the processing unit 230 may further include another component in addition to these components. That is, the processing unit 230 may also perform an operation other than operations of these components. Specific operations of the information obtaining unit 231, the control unit 233, and the communication processing unit 235 will be described in detail later.

For example, the processing unit 230 (communication processing unit 235) communicates with a base station (for example, base station 100) or another UE via the radio communication unit 210.

### (2) Hardware Configuration

Next, an example of a hardware configuration of the UE 200 according to embodiments of the present disclosure will be described with reference to FIG. 6. Referring to FIG. 6, the UE 200 includes an antenna 281, an RF circuit 283, a processor 285, a memory 287, and a storage 289.

The antenna 281 converts signals into radio waves and emits the radio waves into the air. In addition, the antenna 281 receives radio waves in the air and converts the radio waves into signals. The antenna 281 may include a transmitting antenna and a receiving antenna or may be a single antenna for transmission and reception. The antenna 281 may be a directional antenna and may include a plurality of antenna elements.

The RF circuit 283 performs analog processing on signals that are transmitted and received via the antenna 281. The RF circuit 283 may include a high-frequency filter, an amplifier, a modulator, a lowpass filter, and the like.

The processor 285 performs digital processing on signals that are transmitted and received via the antenna 281 and the RF circuit 283. The digital processing includes processing of the RAN protocol stack. The processor 285 may include a plurality of processors or may be a single processor. The plurality of processors may include a baseband processor that performs the digital processing and one or more processors that perform other processing.

The memory 287 stores a program to be executed by the processor 285, a parameter related to the program, and other various kinds of information. The memory 287 may include at least one of a ROM, an EPROM, an EEPROM, a RAM, and a flash memory. All or part of the memory 287 may be included in the processor 285.

The storage 289 stores various kinds of information. The storage 289 may include at least one of an SSD and an HDD.

The radio communication unit 210 may be implemented by the antenna 281 and the RF circuit 283. The storage unit 220 may be implemented by the storage 289. The processing unit 230 may be implemented by the processor 285 and the memory 287.

The processing unit 230 may be implemented by a system on chip (SoC) including the processor 285 and the memory 287. The SoC may include the RF circuit 283, and the radio communication unit 210 may also be implemented by this SoC.

Given the hardware configuration described above, the UE 200 may include a memory (that is, memory 287) that stores a program and one or more processors (that is, processor 285) capable of executing the program, and the one or more processors may perform operations of the processing unit 230 by executing the program. The program may be a program for causing the processors to execute the operations of the processing unit 230.

### <4. Operation Examples>

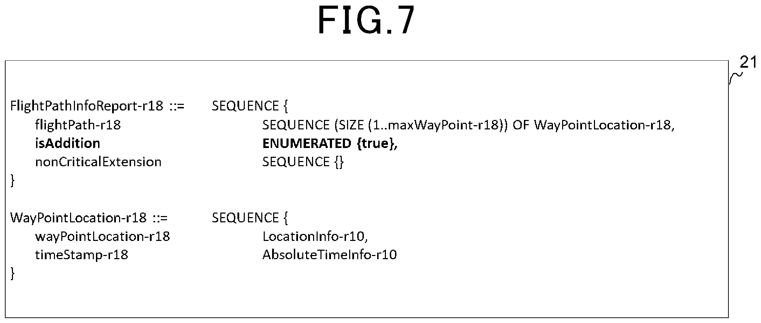

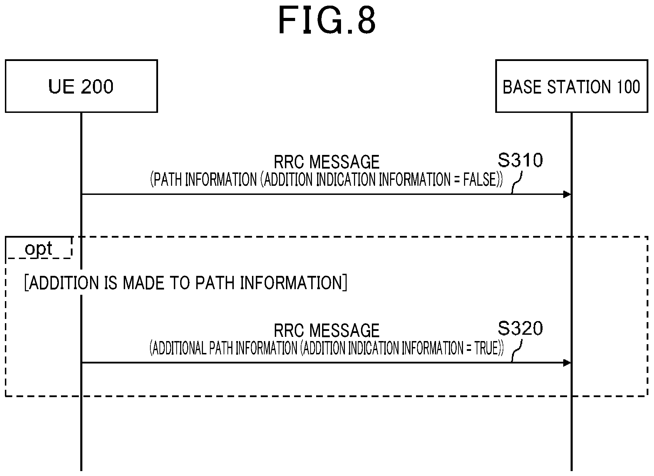

Examples of operations of the base station 100 and the UE 200 according to embodiments of the present disclosure will be described with reference to FIGS. 7 and 8.

### (1) Operation of UE 200

The UE 200 reports path information to the base station 100. Then, when an addition is made to the path information, the UE 200 reports additional path information to the base station 100. The following describes operations of the UE 200 and relevant information in detail.

### (1-1) Report of Path Information

The UE 200 reports path information to the base station 100. Specifically, the UE 200 (information obtaining unit 231) obtains the path information indicating at least a moving path of the UE 200. The UE 200 (communication processing unit 235) transmits an RRC message including the obtained path information to the base station 100.

More specifically, the UE 200 transmits an RRC message A including information indicating availability of path information to the base station 100. Upon receiving an RRC message B including path request information from the base station 100, the UE 200 transmits an RRC message C including the path information to the base station 100. Hereinafter, the above series of processing is also referred to as a UE 200 side path information report procedure.

For example, the RRC message A is an RRC SetupComp, ReestablishmentComp, ResumeComp, ReconfigurationComp, or the like. Further, the RRC message B is a UEInformationRequest and the RRC message C is a UEInformationResponse. For example, the information indicating availability of path information is flightPathInfoAvailable or equivalent information, the path request information is flightPathInfoReq or equivalent information, and the path information is flightPathInfoReport or equivalent information.

The path information will be described in detail with reference to FIG. 7. The path information includes one or more pieces of waypoint-related information regarding a waypoint on the moving path. Further, the path information includes addition indication information regarding that the one or more pieces of the waypoint-related information are additional.

More specifically, the addition indication information indicates whether or not the one or more pieces of the waypoint-related information included in the path information are additional. For example, the path information includes a sequence of the waypoint-related information. The addition indication information indicates whether or not the sequence of the waypoint-related information is additional. Particularly, the path information may be FlightPathInfoReport as illustrated in FIG. 7 and include a sequence of WayPointLocation that is the waypoint-related information. Further, the addition indication information may be isAddition that is a flag as illustrated in FIG. 7. isAddition is a flag indicating whether or not the sequence of WayPointLocation included in FlightPathInfoReport including this isAddition is additional. The value of isAddition is 'true' in a case where the value indicates 'additional', and 'false' in a case where the value indicates `not additional'. In this way, the explicit indication of whether or not the one or more pieces of the waypoint-related information included in the path information are additional enables a more reliable determination of whether or not they are additional.

Further, a piece of the waypoint-related information includes a plurality of pieces of other information. Specifically, the plurality of pieces of other information include at least waypoint information indicating a waypoint on the moving path and time information indicating time regarding the waypoint. For example, as illustrated in FIG. 7, WayPointLocation that is the waypoint information includes wayPointLocation indicating the position of a waypoint and timeStamp indicating arrival time at the waypoint.

### (1-2) Report of Additional Path Information

When a change is made to the path information, the UE 200 reports the additional path information to the base station 100. Specifically, the UE 200 (communication processing unit 235) transmits a first RRC message including first path information and transmits a second RRC message including second path information after transmitting the first RRC message. The second path information includes one or more pieces of the waypoint-related information that are different from any of one or more pieces of the waypoint-related information included in the first path information.

More specifically, in a case where path information is added after an RRC message including path information is transmitted as in above (1-1), the UE 200 transmits an RRC message including the additional path information. The additional path information includes a piece of the waypoint-related information that follows the sequence of the waypoint-related information included in the path information that has been reported. Note that the additional path information may be transmitted through the above-mentioned UE 200 side path information report procedure.

For example, assume that FlightPathInfoReport that has been reported includes a sequence consisting of 10 instances of WayPointLocation. Here, when new three instances of WayPointLocation are added to the sequence, the UE 200 transmits, to the base station 100, FlightPathInfoReport including a sequence consisting of the three instances of WayPointLocation and isAddition of which value is 'true' as the additional path information (that is, second path information).

### (2) Operation of Base Station 100

The base station 100 registers and manages the path information reported from the UE 200. Then, when the additional path information is reported from the UE 200, the base station 100 adds the additional path information to the path information that has been registered. The following describes operations of the base station 100 and relevant information in detail. Note that detailed descriptions of contents that are substantially the same as the descriptions of the operations of the UE 200 will be omitted.

### (2-1) Registration of Path Information

The base station 100 registers the path information received from the UE 200. Specifically, the base station 100 (communication processing unit 145) receives an RRC message including the path information from the UE 200. The base station 100 (information obtaining unit 141) obtains the path information included in the received RRC message. The base station 100 (control unit 143) registers the obtained path information.

For example, the base station 100 receives the above-mentioned RRC message A including the information indicating availability of path information from the UE 200. The base station 100 transmits the above-mentioned RRC message B including the path request information to the UE 200. Then, the base station 100 receives the above-mentioned RRC message C including the path information from the UE 200. Hereinafter, the above series of processing is also referred to as a base station 100 side path information report procedure.

The path information included in the RRC message C received from the UE 200 includes addition indication information. In the first reporting, the one or more pieces of the waypoint-related information included in the path information are new, and thus the addition indication information indicates that the one or more pieces of the waypoint-related information are not additional. For example, the value of isAddition is `false'.

Note that the received path information may be registered and managed as RRC-related information.

### (2-2) Addition to Path Information

When additional path information is reported from the UE 200, the base station 100 adds the reported additional path information to the path information that has been registered. Specifically, the base station 100 (communication processing unit 145) receives a first RRC message including first path information and receives a second RRC message including second path information after receiving the first RRC message. The base station 100 (control unit 143) adds, to the first path information, one or more pieces of the waypoint-related information that are included in the second path information and are different from any of one or more pieces of the waypoint-related information included in the first path information.

More specifically, after receiving an RRC message including the path information as in above (2-1), the base station 100 receives an RRC message including the additional path information. The additional path information includes a piece of the waypoint-related information that follows the sequence of the waypoint-related information included in the path information that has been registered. Note that the additional path information may be received through the above-mentioned base station 100 side path information report procedure.

For example, assume that FlightPathInfoReport that has been registered includes a sequence consisting of 10 instances of WayPointLocation. When a sequence consisting of three instances of WayPointLocation is received as the additional path information (that is, second path information), the base station 100 adds the sequence consisting of the three instances of WayPointLocation to the sequence that has been registered.

### (3) Flow of Processing

An example of processing according to embodiments of the present disclosure will be described with reference to FIG. 8.

The UE 200 transmits an RRC message including the path information to the base station 100 (S310). For example, in the first reporting, the path information to be transmitted is new, and thus the UE 200 transmits an RRC message including the path information including addition indication information of which value is 'false' to the base station 100 through the path information report procedure. The base station 100 receives the RRC message through the path information report procedure. The base station 100 newly registers the received waypoint-related information since the value of the addition indication information included in the received path information is 'false'. Note that, in a case where there is already-registered path information (that is, waypoint-related information), the received path information is written over the already-registered path information.

When an addition is made to the path information, the UE 200 transmits an RRC message including the additional path information to the base station 100 (S320). For example, when new pieces of the waypoint-related information are added to the sequence of the waypoint-related information included in the path information, the UE 200 transmits an RRC message including the path information that includes: the added pieces of the waypoint-related information; and the addition indication information of which value is 'true', and that does not include the already-reported waypoint-related information to the base station 100 through the path information report procedure. The base station 100 adds the received waypoint-related information to the registered sequence of the waypoint-related information since the value of the addition indication information included in the received path information is 'true'.

In this way, according to embodiments of the present disclosure, an RRC message including the path information of the UE 200 is transmitted from the UE 200 to the base station 100, and the path information includes one or more pieces of the waypoint-related information and the addition indication information. Specifically, a first RRC message including first path information is transmitted, and a second RRC message including second path information is transmitted after the first RRC message is transmitted. The second path information includes one or more pieces of the waypoint-related information that are different from any of one or more pieces of the waypoint-related information included in the first path information.

As described above, in the framework of Release 15, since the whole path information for an unreached path is reported, the path information for the unreached path within the already-reported path information may be redundantly reported.

In contrast, according to embodiments of the present disclosure, only the added pieces of the waypoint-related information can be reported to the base station 100. Therefore, redundant reporting of the path information is prevented, which makes it possible to suppress deterioration in signaling efficiency for additions to the path information. As a result, waste of radio resources and power consumption for communication is suppressed.

As described above, in the framework of Release 15, in order to avoid redundant reporting, a UE could report the additional path information when the UE reaches the end of the path indicated by the path information that has been reported. In this case, however, a situation might occur where no base station has the additional path information.

In contrast, according to embodiments of the present disclosure, only the added pieces of the waypoint-related information are reported, and thus reporting can be performed at any possible timings while avoiding redundant reporting. Therefore, the additional path information can be reported before arrival at the end of the path, which makes it possible to avoid the situation where no base station has the additional path information.

### <5. Modification Examples>

First to second modification examples according to embodiments of the present disclosure will be described. Note that two or more of these modification examples may be combined.

### (1) First Modification Example: Addition Indication Information is Optional

In the above-mentioned embodiment of the present disclosure, the addition indication information is always included in the path information as a flag. However, the addition indication information according to embodiments of the present disclosure is not limited to this example.

As a first modification example of embodiments of the present disclosure, the addition indication information may indicate that the one or more pieces of the waypoint-related information included in the path information are additional, and may be included in the path information only in a case where the one or more pieces of the waypoint-related information are additional.

For example, isAddition as illustrated in FIG. 7 is optional and included only in a case where the sequence of WayPointLocation included in FlightPathInfoReport is additional.

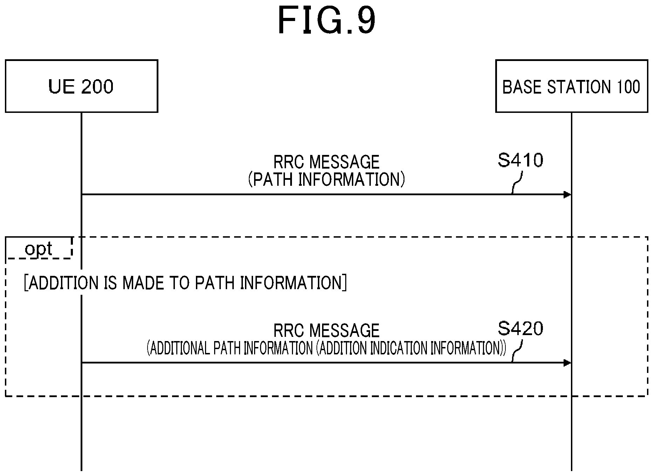

Further, an example of processing according to the present modification example will be described with reference to FIG. 9. Note that descriptions of processing that is substantially the same as the processing in FIG. 8 will be omitted.

The UE 200 transmits an RRC message including the path information to the base station 100 (S410). For example, in the first reporting, the path information to be transmitted is new, and thus the UE 200 transmits an RRC message including the path information not including the addition indication information to the base station 100 through the path information report procedure. The base station 100 receives the RRC message through the path information report procedure. The base station 100 newly registers the received waypoint-related information since the addition indication information is not included in the received path information.

When an addition is made to the path information, the UE 200 transmits an RRC message including the additional path information to the base station 100 (S420). For example, when new pieces of the waypoint-related information are added to the sequence of the waypoint-related information included in the path information, the UE 200 transmits an RRC message including the path information that includes: the added pieces of the waypoint-related information; and the addition indication information, and that does not include the already-reported waypoint-related information to the base station 100 through the path information report procedure. The base station 100 adds the received waypoint-related information to the registered sequence of the waypoint-related information since the addition indication information is included in the received path information.

In this way, according to the first modification example of embodiments of the present disclosure, the addition indication information indicates that the one or more pieces of the waypoint-related information included in the path information are additional, and is included in the path information only in a case where the one or more pieces of the waypoint-related information are additional. Therefore, data volume in the case of the one or more pieces of the waypoint-related information being not additional is reduced, which makes it possible to improve signaling efficiency.

### (2) Second Modification Example: Compliance with Other TSs

In the above-mentioned examples of embodiments of the present disclosure, the system 1 is a system compliant with the TSs of 5G or NR. However, the system 1 according to embodiments of the present disclosure is not limited to these examples.

In a second modification example of embodiments of the present disclosure, the system 1 may be a system compliant with other TSs in 3GPP. As an example, the system 1 may be a system compliant with the TSs of LTE, LTE-A, or 4G and the base station 100 may be an evolved node B (eNB). Alternatively, the base station 100 may be an ng-eNB. As another example, the system 1 may be a system compliant with the TSs of 3G and the base station 100 may be a Node B. As yet another example, the system 1 may be a system compliant with TSs of next generation (for example, 6G).

Alternatively, the system 1 may be a system compliant with TSs of another standardization organization for mobile communications.

While embodiments of the present disclosure have been described above, the present disclosure is not limited to the embodiments. It will be understood by those skilled in the art that the embodiments are merely examples and various changes can be made without departing from the scope and the spirit of the present disclosure.

For example, steps in a process described in the present specification do not necessarily have to be executed chronologically in the order described in the flowchart or sequence diagram. For example, steps in a process may be executed in an order different from the order described as the flowchart or sequence diagram or may be executed in parallel. In addition, some of steps in a process may be removed or a further step may be added to the process.

For example, there may be provided a method including the operations of one or more components of the apparatus described in the present specification, or there may be provided a program for causing a computer to execute the operations of the components. Moreover, there may be provided a non-transitory tangible computer-readable storage medium having stored therein the program. Naturally, such a method, program, and non-transitory tangible computer-readable storage medium are also included in the present disclosure.

For example, in the present disclosure, a user equipment (UE) may be referred to by another name such as mobile station, mobile terminal, mobile apparatus, mobile unit, subscriber station, subscriber terminal, subscriber apparatus, subscriber unit, wireless station, wireless terminal, wireless apparatus, wireless unit, remote station, remote terminal, remote apparatus, or remote unit.

For example, in the present disclosure, "transmit" may mean to perform processing of at least one layer in a protocol stack used for transmission or to physically transmit signals wirelessly or by wire. Alternatively, "transmit" may mean a combination of performing the processing of at least one layer and physically transmitting signals wirelessly or by wire. Similarly, "receive" may mean to perform processing of at least one layer in a protocol stack used for reception or to physically receive signals wirelessly or by wire. Alternatively, "receive" may mean a combination of performing the processing of at least one layer and physically receiving signals wirelessly or by wire. The at least one layer may be replaced with at least one protocol.

For example, in the present disclosure, "obtain/acquire" may mean to obtain/acquire information from stored information, to obtain/acquire information from information received from another node, or to obtain/acquire information by generating the information.

For example, in the present disclosure, "include" and "comprise" do not mean that listed items alone are included, but mean that listed items alone may be included or a further item may be included in addition to the listed items.

For example, in the present disclosure, "or" does not mean exclusive OR but means inclusive OR.

Note that the technical features included in the above-mentioned embodiments may be represented as the following features. Naturally, the present disclosure is not limited to the following features.

(Feature 1) A user equipment (200) comprising:
   an information obtaining unit (231) configured to obtain path information indicating at least a moving path of the user equipment; and
   a communication processing unit (235) configured to transmit, to a base station (100), a radio resource control, RRC, message including the path information,
   wherein
   the path information includes one or more pieces of waypoint-related information regarding a waypoint on the moving path, and addition indication information regarding that the one or more pieces of the waypoint-related information are additional.
(Feature 2) The user equipment according to Feature 1, wherein
   the addition indication information indicates whether or not the one or more pieces of the waypoint-related information are additional.
(Feature 3) The user equipment according to Feature 1, wherein
   the addition indication information indicates that the one or more pieces of the waypoint-related information are additional, and is included in the path information only in a case where the one or more pieces of the waypoint-related information are additional.
(Feature 4) The user equipment according to any one of Features 1 to 3,
   wherein the communication processing unit is configured to transmit a first RRC message including first path information and to transmit a second RRC message including second path information after transmitting the first RRC message, and
   the second path information includes one or more pieces of the waypoint-related information that are different from any of one or more pieces of the waypoint-related information included in the first path information.
(Feature 5) A base station (100) comprising:
   a communication processing unit (145) configured to receive, from a user equipment (200), a radio resource control, RRC, message including path information indicating at least a moving path of the user equipment; and
   an information obtaining unit (141) configured to obtain the path information included in the RRC message,
   wherein
   the path information includes one or more pieces of waypoint-related information regarding a waypoint on the moving path, and addition indication information regarding that the one or more pieces of the waypoint-related information are additional.
(Feature 6) The base station according to Feature 5,
   wherein the communication processing unit is configured to receive a first RRC message including first path information and to receive a second RRC message including second path information after receiving the first RRC message, and
   the base station further comprises a control unit (143) configured to add, to the first path information, one or more pieces of the waypoint-related information that are included in the second path information and are different from any of one or more pieces of the waypoint-related information included in the first path information.
(Feature 7) A method performed by a user equipment (200) comprising:
   obtaining path information indicating at least a moving path of the user equipment; and
   transmitting, to a base station (100), a radio resource control, RRC, message including the path information,
   wherein
   the path information includes one or more pieces of waypoint-related information regarding a waypoint on the moving path, and addition indication information regarding that the one or more pieces of the waypoint-related information are additional.
(Feature 8) A method performed by a base station (100), comprising:
   receiving, from a user equipment (200), a radio resource control, RRC, message including path information indicating at least a moving path of the user equipment; and
   obtaining the path information included in the RRC message,
   wherein
   the path information includes one or more pieces of waypoint-related information regarding a waypoint on the moving path, and addition indication information regarding that the one or more pieces of the waypoint-related information are additional.
(Feature 9) A program that causes a computer to execute operations of:
   obtaining path information indicating at least a moving path of a user equipment (200); and
   transmitting, to a base station (100), a radio resource control, RRC, message including the path information,
   wherein
   the path information includes one or more pieces of waypoint-related information regarding a waypoint on the moving path, and addition indication information regarding that the one or more pieces of the waypoint-related information are additional.
(Feature 10) A program that causes a computer to execute operations of:
   receiving, from a user equipment (200), a radio resource control, RRC, message including path information indicating at least a moving path of the user equipment; and
   obtaining the path information included in the RRC message,
   wherein
   the path information includes one or more pieces of waypoint-related information regarding a waypoint on the moving path, and addition indication information regarding that the one or more pieces of the waypoint-related information are additional.
(Feature 11) A non-transitory tangible computer-readable storage medium having stored therein a program that causes a computer to execute operations of:
   obtaining path information indicating at least a moving path of a user equipment (200); and
   transmitting, to a base station (100), a radio resource control, RRC, message including the path information,
   wherein
   the path information includes one or more pieces of waypoint-related information regarding a waypoint on the moving path, and addition indication information regarding that the one or more pieces of the waypoint-related information are additional.
(Feature 12) A non-transitory tangible computer-readable storage medium having stored therein a program that causes a computer to execute operations of:
   receiving, from a user equipment (200), a radio resource control, RRC, message including path information indicating at least a moving path of the user equipment; and
   obtaining the path information included in the RRC message,
   wherein
   the path information includes one or more pieces of waypoint-related information regarding a waypoint on the moving path, and addition indication information regarding that the one or more pieces of the waypoint-related information are additional.

## Claims

1. An apparatus (200) comprising:
an information obtaining unit (231) configured to obtain path information indicating at least a moving path of the apparatus; and
a communication processing unit (235) configured to transmit, to a base station (100), a radio resource control, RRC, message including the path information,
wherein
the path information includes one or more pieces of waypoint-related information regarding a waypoint on the moving path, and addition indication information regarding that the one or more pieces of the waypoint-related information are additional.

2. The apparatus according to claim 1, wherein
the addition indication information indicates whether or not the one or more pieces of the waypoint-related information are additional.

3. The apparatus according to claim 1, wherein
the addition indication information indicates that the one or more pieces of the waypoint-related information are additional, and is included in the path information only in a case where the one or more pieces of the waypoint-related information are additional.

4. The apparatus according to any one of claims 1 to 3,
wherein the communication processing unit is configured to transmit a first RRC message including first path information and to transmit a second RRC message including second path information after transmitting the first RRC message, and
the second path information includes one or more pieces of the waypoint-related information that are different from any of one or more pieces of the waypoint-related information included in the first path information.

5. An apparatus (100) comprising:
a communication processing unit (145) configured to receive, from a user equipment (200), a radio resource control, RRC, message including path information indicating at least a moving path of the user equipment; and
an information obtaining unit (141) configured to obtain the path information included in the RRC message,
wherein
the path information includes one or more pieces of waypoint-related information regarding a waypoint on the moving path, and addition indication information regarding that the one or more pieces of the waypoint-related information are additional.

6. The apparatus according to claim 5,
wherein the communication processing unit is configured to receive a first RRC message including first path information and to receive a second RRC message including second path information after receiving the first RRC message, and
the apparatus further comprises a control unit (143) configured to add, to the first path information, one or more pieces of the waypoint-related information that are included in the second path information and are different from any of one or more pieces of the waypoint-related information included in the first path information.

7. A method performed by an apparatus (200) comprising:
obtaining path information indicating at least a moving path of the apparatus; and
transmitting, to a base station (100), a radio resource control, RRC, message including the path information,
wherein
the path information includes one or more pieces of waypoint-related information regarding a waypoint on the moving path, and addition indication information regarding that the one or more pieces of the waypoint-related information are additional.

8. A method performed by an apparatus (100), comprising:
receiving, from a user equipment (200), a radio resource control, RRC, message including path information indicating at least a moving path of the user equipment; and
obtaining the path information included in the RRC message,
wherein
the path information includes one or more pieces of waypoint-related information regarding a waypoint on the moving path, and addition indication information regarding that the one or more pieces of the waypoint-related information are additional.
